# EUROPÄISCHE PATENTSCHRIFT

(11) **EP 3 139 481 B1**
(45) Veröffentlichungstag und Bekanntmachung des Hinweises auf die Patenterteilung: **12.05.2021**
(21) Anmeldenummer: 15183893.5
(22) Anmeldetag: 04.09.2015
(51) Int. Cl.: H02M 1/36, H02M 3/158, H02M 1/32, H02J 3/38

(54) **VERFAHREN ZUM BETRIEB EINER PHOTOVOLTAIKANLAGE**
METHOD FOR OPERATING A PHOTOVOLTAIC ASSEMBLY
PROCEDE DESTINE AU FONCTIONNEMENT D'UNE INSTALLATION PHOTOVOLTAÏQUE

(43) Veröffentlichungstag der Anmeldung: 08.03.2017
(73) Patentinhaber: Siemens Aktiengesellschaft, 80333 München (DE)
(72) Erfinder: Hörist, Gerald, 1220 Wien (AT); Pürstl, Gerrit, 1090 Wien (AT); Trnka, Alexander, 2201 Gerasdorf bei Wien (AT)
(74) Vertreter: Maier, Daniel Oliver

(56) Entgegenhaltungen:
- WO-A1-2015/015531
- US-A1- 2008 150 366
- US-A1- 2011 205 773
- US-A1- 2014 306 541

## Beschreibung

Die Erfindung betrifft ein Verfahren zum Betrieb einer Photovoltaikanlage, welche Solarmodule, zumindest einen Gleichspannungswandler und einen Gleichspannungszwischenkreis umfasst.

Photovoltaik-Anlagen dienen der Umwandlung von Sonnenstrahlung in elektrische Energie. Sie umfassen einzelne Solarzellen, die zu sogenannten Solarmodulen oder Solar-Paneelen zusammengefasst werden. Diese werden wiederum - je nach Anlagengröße und Anlagentyp - elektrisch in Reihe zu sogenannten Strings verschaltet.

Dabei addiert sich die Spannung der einzelnen Module. Bei Bedarf können auch mehrere dieser Strings elektrisch parallel zueinander geschaltet werden.

Handelt es sich um eine netzgekoppelte Photovoltaik-Anlage, so wird für die Einspeisung der erzeugten elektrischen Energie in das Wechselstromnetz - beispielsweise das öffentliche Stromnetz - der in den Solarmodulen erzeugte Gleichstrom mittels Wechselrichter in Wechselstrom umgewandelt.

Ein maximaler Ertrag an elektrischer Energie wird erzielt, wenn die Solarmodule in einem Arbeitspunkt betrieben werden, in dem sie die maximale elektrische Leistung abgeben.

Dieser optimale Arbeitspunkt MPP (Maximum Power Point) wird durch die Steuerung der Belastung der Solarmodule mit einem MPP-Trackingverfahren erzielt.

Um einen ausreichend großen Variationsbereich für das MPP-Tracking bereitzustellen und um Solarmodule auch für eine geringere Spannung auslegen zu können, kann eine mehrstufige Umsetzung der von den Solarmodulen gelieferten Spannung vorgesehen sein. Dazu werden den Wechselrichtern Gleichspannungswandler vorgeschaltet. Diese weisen eine große Variationsmöglichkeit ihres Spannungsübertragungsverhältnisses auf, wodurch der Arbeitspunkt von mit den Gleichspannungswandlern verbundenen Solarmodulen in weiten Grenzen variiert werden kann. So kann mit Gleichspannungswandlern, die als Hochsetzsteller ausgebildet sind, auch dann noch in das Energieversorgungsnetz eingespeist werden, wenn die Ausgangsspannung der Solarmodule kleiner ist als die benötigte Mindestspannung der Wechselrichter.

Insbesondere aus Kostengründen werden die Gleichspannungswandler nur für einen begrenzten Eingangsspannungsbereich um den optimale Arbeitspunkt MPP (Maximum Power Point) ausgelegt.

Sie sind daher nicht für die Leerlaufspannung der Solarmodule ausgelegt. Diese Leerlaufspannung tritt beispielsweise bei Sonnenaufgang oder nach einer vorübergehenden Beschattung der Solarmodule auf, wenn keine Leistungsentnahme aus der Solarzelle erfolgt.

Um in diesen Fällen eine Schädigung der Gleichspannungswandler durch Überspannung zu verhindern, werden üblicherweise die Solarmodule während dieser Phasen mit geeigneten Einrichtungen wie beispielweise parallel geschalteten Schützen und Widerständen belastet Aus dem US 2011/205773 A1 sind ein Verfahren sowie eine Vorrichtung bekannt, durch welche eine von einer Gleichspannungsquelle (wie z.B. einem Feld mit Solarmodulen) zur Verfügung gestellte Spannung in eine Wechselspannung umgewandelt wird. Dazu umfasst die Vorrichtung neben der Gleichspannungsquelle, einen Gleichspannungswandler, welche Gleichspannung einem Gleichspannungszwischenkreis zur Verfügung stellt. Durch den Zwischenkreis wird der Gleichspannungswandler mit einem Wechselrichter gekoppelt, welcher in einer zweiten Stufe die Gleichspannung aus dem Zwischenkreis in eine Wechselspannung umwandelt. Weiterhin ist ein Steuersystem für den Gleichspannungswandler und den Wechselrichter vorgesehen, wobei durch das Steuersystem der Output des Gleichspannungswandler sowie des Wechselrichters reguliert wird. Bei Übergangszuständen (z.B. beim Anschalten oder Abkoppeln der Solarmodule, usw.) wird die Zwischenkreisspannung kurzzeitig derart angepasst, dass einer Spannungsspitze standgehalten werden kann bzw. keine Schaden im Leistungswandler auftreten.

Der Erfindung liegt die Aufgabe zugrunde, den Stand der Technik weiterzuentwickeln.

Erfindungsgemäß geschieht dies mit einem Verfahren gemäß Anspruch 1.

Vorteilhafte Ausgestaltungen ergeben sich aus den Unteransprüchen.

Die Erfindung wird anhand einer Figur näher erläutert, welche eine schematische Darstellung einer erfindungsgemäßen Photovoltaikanlage zeigt.

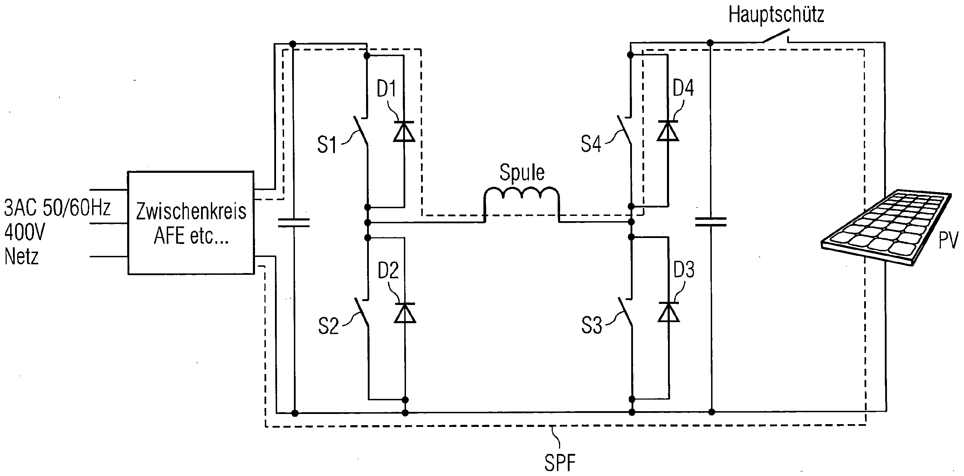

Die Anlage nach Fig. 1 umfasst ein Solarmodul PV, ein Hauptschütz H, einen aus Halbleiterschaltern S1, S2, S3, S4, einer Spule und Freilaufdioden D1, D2, D3, D4 aufgebauten Gleichspannungswandler und einen Gleichspannungszwischenkreis ZK.

Solarmodule PV sind aus einzelnen Solarzellen, aufgebaut, sie können ggf. elektrisch in Reihe zu sogenannten Strings verschaltet werden, um so höhere Ausgangsspannungen zu erzielen.

Als Solarzellen können beispielsweise kristalline oder amorphe Solarzellen auf Silizium-Basis vorgesehen werden.

Das erfindungsgemäße Verfahren ist jedoch nicht auf eine bestimmte Solarzellenart beschränkt.

Als Gleichspannungswandler ist beim Ausführungsbeispiel ein DC/DC-Steller des Typs SINAMICS DCP vorgesehen, dessen Aufbau einem Buck-Boost Converter entspricht, wobei die Schaltelemente des Gleichspannungswandlers als IGBT-Transistoren ausgebildet sind.

An den Gleichspannungszwischenkreis ZK können Wechselrichter angeschlossen sein, über welche die Einspeisung der von den Solarmodulen durch Umwandlung der Strahlungsenergie des Sonnenlichtes erzeugten elektrischen Energie in ein Wechselspannungsnetz erfolgt.

Denkbar ist es allerdings auch, dass die erzeugte elektrische Gleichspannung zur Ladung eines Batteriesystems oder zur direkten Versorgung elektrischer Verbraucher mit Gleichspannung genutzt wird.

Ein vorteilhafter Einsatzfall kann auch darin bestehen, dass die Solarmodule PV gemeinsam mit anderen Stromgeneratoren wie beispielsweise Windkraftanlagen in einem Multigeneratorsystem eingesetzt werden.

Gleichspannungszwischenkreis und Wechselrichter können beispielsweise mit Wechselrichterkomponenten des Typs SINAMICS S120 realisiert werden.

Der zulässige Wert der Eingangsspannung für einen ordnungsgemäßen Betrieb des genannten Gleichspannungswandlers liegt zwischen 30V und 800V.

Dieser Wert kann bei einer entsprechenden Verschaltung der Solarmodule im Leerlauf überschritten werden.

Nach dem Stand der Technik ist es daher üblich die Leerlaufspannung durch einen Kurschluss der Solarmodule mittels Schütz zu reduzieren, um so die Spannung in einen erlaubten Bereich zu ziehen.

Diese Lösung bringt konstruktive Aufwände mit sich, die nach der Erfindung dadurch vermieden werden, dass in einer Übergangsphase zwischen unbelastetem und belastetem Zustand der Solarmodule die Schaltelemente des Gleichspannungswandlers in einen Schaltzustand gebracht werden, der einen dauerhaften Strompfad zwischen dem Ausgang der Solarmodule und dem Zwischenkreis bildet.

Beim Ausführungsbeispiel wird dies dadurch erreicht, dass das Hauptschütz H und das vierte Schaltelement S4 geschlossen sind und der Strompfad SPF über Hauptschütz H, das vierte Schaltelement S4 , die Spule SP und die erste Freilaufdiode D1 geschlossen ist, sodass das Solarmodul belastet wird und sich nicht die volle Leerlaufspannung aufbauen kann. Sobald die Betriebsbereitschaft des Solarmoduls d.h. die erforderliche Mindest-leistungsabgabe erreicht wird, wechselt der Gleichspannungswandler in den normalen Betriebszustand, der durch die Steuerung der Belastung der Solarmodule mit einem MPP-Trackingverfahren eine optimale Leistungsentnahme bewirkt.

### Bezugszeichenliste

- PV: Solarmodul
- H: Hauptschütz
- S1, S2, S3, S4: Halbleiterschalter
- D1, D2, D3, D4: Diode
- SP: Spule
- ZK: Zwischenkreis
- SPF: Strompfad

## Patentansprüche

1. Verfahren zum Betrieb einer Photovoltaikanlage, welche Solarmodule, ein Hauptschütz (H) zum Kurzschließen der Solarmodule (PV), zumindest einen Gleichspannungswandler und
einen Gleichspannungszwischenkreis (ZK) umfasst, **dadurch gekennzeichnet, dass** als Gleichspannungswandler ein H-brückenförmiger Buck-Boost Converter (S1, S2, S3, S4, D1, D2, D3, D4, SP) mit einer Spule (SP) und vier Schaltelementen (S1, S2, S3, S4), welchen jeweils eine Freilaufdiode (D1, D2, D3, D4) zugeordnet ist, eingesetzt wird, und dass in einer Übergangsphase
zwischen unbelastetem und belastetem Zustand der Solarmodule die Schaltelemente (S1,S2,S3,S4) des Gleichspannungswandlers in einen Schaltzustand gebracht werden, der einen dauerhaften Strompfad (SPF) zwischen dem Ausgang der Solarmodule (PV) und dem Zwischenkreis (ZK) bildet, wobei der Strompfad (SPF) über den geschlossenen Hauptschütz (H), über ein geschlossenes Schaltelement (S4), welches solarmodulseitig auf einer High-Side des H-brückenförmigen Gleichspannungswandlers angeordnet ist, über die Spule (SP) des Gleichspannungswandlers und über eine Freilaufdiode (D1), welche einem zwischenkreisseitig auf der High-Side des H-brückenförmigen Gleichspannungswandlers angeordneten Schaltelement (S1) zugeordnet ist, geschlossen ist.

2. Verfahren nach Anspruch 1, **dadurch gekennzeichnet, dass** die Schaltelemente (S1, S2, S3, S4) des Gleichspannungswandlers als IGBT-Transistoren ausgebildet sind.

3. Verfahren nach einem der Ansprüche 1 bis 2, **dadurch gekennzeichnet, dass** an den Gleichspannungszwischenkreis (ZK) zumindest ein Wechselrichter zur Anbindung an ein Wechselspannungsnetz angeschlossen ist.

4. Verfahren nach einem der Ansprüche 1 bis 3, **dadurch gekennzeichnet, dass** an den Gleichspannungszwischenkreis ein Batteriesystem zur Speicherung der elektrischen Energie angeschlossen ist.

5. Photovoltaikanlage, welche zur Durchführung eines Verfahrens nach einem der Ansprüche 1 bis 4 eingerichtet ist und wobei Solarmodule (PV), ein Hauptschütz (H) zum Kurzschließen der Solarmodule (PV), zumindest ein Gleichspannungswandler und ein Gleichspannungszwischenkreis (ZK) vorgesehen sind, **dadurch gekennzeichnet dass** der Gleichspannungswandler als H-brückenförmiger Buck-Boost Converter (S1, S2, S3, S4, D1, D2, D3, D4, SP) mit einer Spule (SP) und vier Schaltelementen (S1, S2, S3, S4), welchen jeweils eine Freilaufdiode (D1, D2, D3, D4) zugeordnet ist, ausgebildet ist, und dass weiterhin Mittel zur Ansteuerung de: H-brückenförmigen
Gleichspannungswandlers in der Weise vorgesehen sind, dass in einer Übergangsphase zwischen unbelastetem und belastetem Zustand der Solarmodule (PV) die Schaltelemente
des Gleichspannungswandlers (S1, S2, S3, S4, D1, D2, D3, D4, SP)einen Schaltzustand aufweisen, der einen dauerhaften Strompfad (SPF) zwischen dem Ausgang der Solarmodule (PV) und dem Zwischenkreis (ZK) bildet, wobei der Strompfad (SPF) über den geschlossenen Hauptschütz (H), über ein geschlossenes Schaltelement (S4), welches solarmodulseitig auf einer High-Side des H-brückenförmigen Gleichspannungswandlers angeordnet ist, über die Spule (SP) des Gleichspannungswandlers und über eine Freilaufdiode (D1), welche einem zwischenkreisseitig auf der High-Side des H-brückenförmigen Gleichspannungswandlers angeordneten Schaltelement (S1) zugeordnet ist, geschlossen ist.

## Claims

1. Method for operating a photovoltaic system, which comprises solar panels, a main contactor (H) for short-circuiting the solar panels (PV), at least one DC-DC converter and an intermediate DC circuit (ZK), **characterised in that** an H-bridge-shaped buck-boost converter (S1, S2, S3, S4, D1, D2, D3, D4, SP) with a coil (SP) and four switching elements (S1, S2, S3, S4), which are assigned a freewheeling diode (D1, D2, D3, D4) in each case, is used as the DC-DC converter, and that in a transition phase between unloaded and loaded state of the solar panels, the switching elements (S1, S2, S3, S4) of the DC-DC converter are brought into a switching state which forms a permanent current path (SPF) between the output of the solar panels (PV) and the intermediate circuit (ZK), wherein the current path (SPF) is closed by way of the closed main contactor (H), by way of a closed switching element (S4), which is arranged on the solar panel side on a high-side of the H-bridge-shaped DC-DC converter, by way of the coil (SP) of the DC-DC converter and by way of a freewheeling diode (D1), which is assigned to a switching element (S1) arranged on the intermediate circuit side on the high-side of the H-bridge-shaped DC-DC converter.

2. Method according to claim 1, **characterised in that** the switching elements (S1, S2, S3, S4) of the DC-DC converter are embodied as IGBT transistors.

3. Method according to one of claims 1 to 2, **characterised in that** at least one inverter for connection to an AC voltage network is connected to the intermediate DC circuit (ZK).

4. Method according to one of claims 1 to 3, **characterised in that** a battery system for storing the electrical energy is connected to the intermediate DC circuit.

5. Photovoltaic system, which is configured to perform a method according to one of claims 1 to 4, and wherein solar panels (PV), a main contactor (H) for short-circuit the solar panels (PV), at least one DC-DC converter and an intermediate DC circuit (ZK) are provided, **characterised in that** the DC-DC converter as the H-bridge-shaped buck-boost converter (S1, S2, S3, S4, D1, D2, D3, D4, SP) is embodied with a coil (SP) and four switching elements (S1, S2, S3, S4), to which is assigned a freewheeling diode (D1, D2, D3, D4) in each case, and that means are also provided to actuate the H-bridge shaped DC-DC converter such that in a transition phase between unloaded and loaded state of the solar panels (PV), the switching elements of the DC-DC converter (S1, S2, S3, S4, D1, D2, D3, D4, SP) have a switching state, which forms a permanent current path (SPF) between the output of the solar panels (PV) and the intermediate circuit (ZK), wherein the current path (SPF) is closed by way of the closed main contactor (H), by way of a closed switching element (S4), which is arranged on the solar panel side on a high-side of the H-bridge-shaped DC-DC converter, by way of the coil (SP) of the DC-DC converter and by way of a freewheeling diode (D1), which is assigned to a switching element (S1) arranged on the intermediate circuit side on the high-side of the H-bridge-shaped DC-DC converter.

## Revendications

1. Procédé pour faire fonctionner une installation photovoltaïque, qui comprend des modules solaires, un contacteur principal (H) pour court-circuiter les modules solaires (PV), au moins un convertisseur de tension continue-continue et un circuit intermédiaire de tension continue (ZK),
**caractérisé en ce qu'**en tant que convertisseur de tension continue-continue, un convertisseur Buck-Boost en forme de pont en H (S1, S2, S3, S4, D1, D2, D3, D4, SP) comprenant une bobine (SP) et quatre éléments de commutation (S1, S2, S3, S4), auxquels une diode de roue libre (D1, D2, D3, D4) est respectivement associée, est utilisé et
**en ce que**, dans une phase de transition entre un état non chargé et chargé des modules solaires, les éléments de commutation (S1, S2, S3, S4) du convertisseur de tension continue-continue sont mis dans un état de commutation, qui forme un trajet de courant (SFP) durable entre la sortie des modules solaires (PV) et le circuit intermédiaire (ZK), dans lequel le trajet de courant (SPF) est fermé en passant par le contacteur principal (H) fermé, via un élément de commutation fermé (S4) qui est disposé du côté module solaire sur un côté haut du convertisseur de tension continue-continue en forme de pont en H, via la bobine (SP) du convertisseur de tension continue-continue et via une diode de roue libre (D1) qui est associée à un élément de commutation (S1) disposé du côté circuit intermédiaire sur le côté haut du convertisseur de tension continue-continue en forme de pont en H.

2. Procédé selon la revendication 1, **caractérisé en ce que** les éléments de commutation (S1, S2, S3, S4) du convertisseur de tension continue-continue sont conçus sous forme de transistors IGBT.

3. Procédé selon l'une des revendications 1 à 2, **caractérisé en ce qu'**au moins un onduleur pour la connexion à un réseau de tension alternative est connecté au circuit intermédiaire de tension continue (ZK).

4. Procédé selon l'une des revendications 1 à 3, **caractérisé en ce qu'**au moins un système de batterie pour stocker l'énergie électrique est connecté au circuit intermédiaire de tension continue.

5. Installation photovoltaïque, qui est configurée pour mettre en œuvre un procédé selon l'une des revendications 1 à 4 et dans laquelle des modules solaires (PV), un contacteur principal (H) pour court-circuiter les modules solaires (PV), au moins un convertisseur de tension continue-continue et un circuit intermédiaire de tension continue (ZK) sont agencés,
**caractérisée en ce que**
le convertisseur de tension continue-continue est configuré sous forme d'un convertisseur Buck-Boost en forme de pont en H (S1, S2, S3, S4, D1, D2, D3, D4, SP) comprenant une bobine (SP) et quatre éléments de commutation (S1, S2, S3, S4), auxquels une diode de roue libre (D1, D2, D3, D4) est respectivement associée, et
**en ce qu'**en outre, des moyens d'excitation du convertisseur de tension continue-continue en forme de pont en H sont configurés de telle manière que, dans une phase de transition entre un état non chargé et chargé des modules solaires (PV), les éléments de commutation du convertisseur de tension continue-continue (S1, S2, S3, S4, D1, D2, D3, D4, SP) présentent un état de commutation, qui forme un trajet de courant (SFP) durable entre la sortie des modules solaires (PV) et le circuit intermédiaire (ZK), dans lequel le trajet de courant (SPF) est fermé en passant par le contacteur principal (H) fermé, via un élément de commutation fermé (S4) qui est disposé du côté module solaire sur un côté haut du convertisseur de tension continue-continue en forme de pont en H, via la bobine (SP) du convertisseur de tension continue-continue et via une diode de roue libre (D1) qui est associée à un élément de commutation (S1) disposé du côté circuit intermédiaire sur le côté haut du convertisseur de tension continue-continue en forme de pont en H.
